# FASCICULE DE BREVET EUROPEEN

(11) **EP 2 999 619 B1**
(45) Date de publication et mention de la délivrance du brevet: **01.03.2017**
(21) Numéro de dépôt: 14725234.0
(22) Date de dépôt: 22.04.2014
(51) Int. Cl.: B62D 25/20

(54) **ENSEMBLE COMPRENANT UN LONGERON INTERIEUR DE LA CAISSE D'UN VEHICULE, UNE CLOISON ET UN SUPPORT D'ENROULEUR DE CEINTURE DE SECURITE**
ANORDNUNG MIT EINEM INNENELEMENT EINES FAHRZEUGAUFBAUS, TRENNWAND UND SICHERHEITSGURTEINZUGSHALTERUNG
ASSEMBLY COMPRISING AN INNER SIDE-MEMBER OF THE BODY OF A VEHICLE, A PARTITION AND A SAFETY-BELT-RETRACTOR SUPPORT

(30) Priorité: 23.05.2013 FR 1354637
(43) Date de publication de la demande: 30.03.2016
(73) Titulaire: Peugeot Citroën Automobiles SA, 78140 Vélizy Villacoublay (FR)
(72) Inventeur: BOILEAU, Cyril, F-25250 Geney (FR); POIGNARD, Thierry, F-25200 Grand-charmont (FR)
(74) Mandataire: Fosse, Danièle
(86) Numéro de dépôt international: PCT/FR2014/050960
(87) Numéro de publication internationale: WO 2014/188099

(56) Documents cités:
- EP-A1- 1 700 776
- WO-A1-2013/024219
- DE-A1- 3 018 811
- DE-A1-102010 018 407
- FR-A1- 2 971 756
- JP-A- 2000 038 165

## Description

La présente invention concerne un ensemble comprenant un longeron intérieur et un longeron extérieur de la caisse d'un véhicule automobile, ces deux longerons formant ensemble un corps creux, une cloison conçue pour renforcer la caisse à l'égard des chocs latéraux s'étendant transversalement entre lesdits longerons et un support d'enrouleur de ceinture de sécurité étant fixé audit longeron intérieur dans une zone située sensiblement en regard de ladite cloison.

Un ensemble de ce type est représenté sur les figures 1 et 2 et un autre ensemble selon le préambule de la revendication 1 est divulgué par le document JP 2000 038165 A.

La figure 1 montre un ensemble connu dans lequel le longeron extérieur a été enlevé.

La figure 2 est une vue schématique en coupe transversale d'un ensemble connu du type montré sur la figure 1.

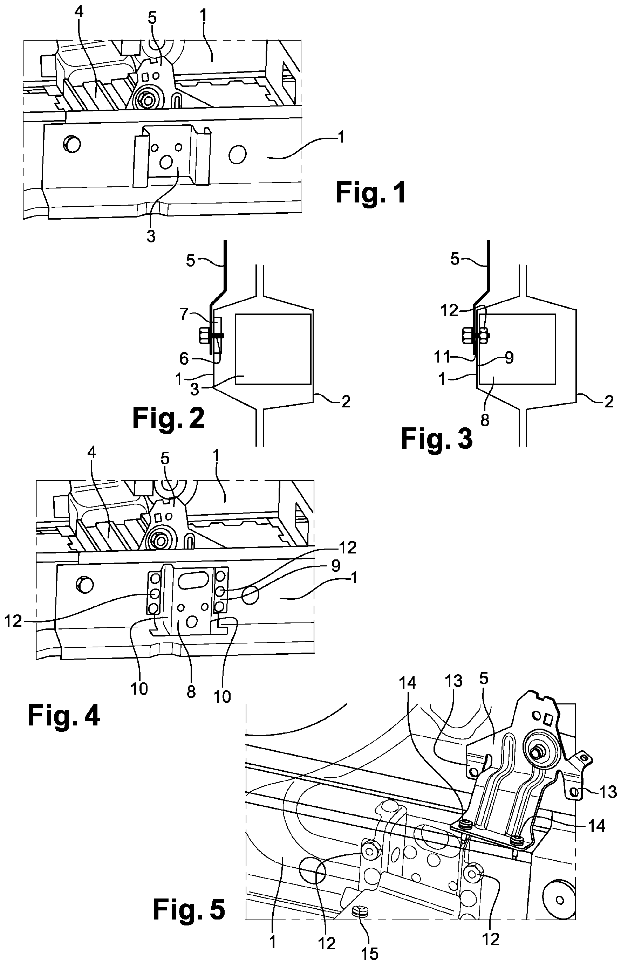

L'ensemble représenté sur les figures 1 et 2 comprend un longeron intérieur 1 et un longeron extérieur 2 (qui a été enlevé sur la figure 1) formant ensemble un corps creux.

Le longeron extérieur 2 est également appelé renfort de longeron.

L'ensemble ci-dessus comporte également une cloison en tôle 3 conçue ou dimensionnée pour renforcer la caisse vis-à-vis des chocs latéraux.

Cette cloison 3 est soudée au longeron extérieur 2 et un espace libre subsiste entre cette cloison 3 et le longeron intérieur 1.

Par ailleurs, cette cloison 3 est située à la verticale du pied milieu (non visible sur les figures) et en regard de la traverse arrière 4 (voir figure 1) des sièges avant du véhicule.

L'ensemble connu ci-dessus comprend en outre un support 5 d'enrouleur de ceinture de sécurité qui est fixé au longeron intérieur 1 dans une zone située en regard de la cloison 3.

Ce support 5 est fixé sur le longeron intérieur 1 au moyen de deux vis telles que la vis 6 visible sur la figure 2 qui traverse successivement le support 5, le longeron 1 et une plaque de mattage 7 qui est soudée sur ce longeron 1.

Les deux vis 6 sont vissées sur des écrous respectifs soudés sur la plaque 7.

Cette plaque 7 présente une forte épaisseur et a pour fonction de renforcer la résistance à l'arrachement du support d'enrouleur 5.

Cette plaque 7 présente cependant l'inconvénient d'avoir une masse relativement élevée et d'augmenter les temps de montage.

Le but de la présente invention est de remédier à ces inconvénients.

Ce but est atteint, selon l'invention, grâce à un ensemble comprenant un longeron intérieur et un longeron extérieur de la caisse d'un véhicule automobile, ces deux longerons formant ensemble un corps creux, une cloison conçue pour renforcer la caisse à l'égard des chocs latéraux s'étendant transversalement entre lesdits longerons et un support d'enrouleur de ceinture de sécurité étant fixé audit longeron intérieur dans une zone située sensiblement en regard de ladite cloison, caractérisé en ce que ledit support d'enrouleur de ceinture est fixé à la fois audit longeron intérieur et à ladite cloison.

Le fait que le support d'enrouleur soit fixé à la fois audit longeron et à ladite cloison permet de supprimer la plaque de mattage évoquée plus haut et les inconvénients liés à cette plaque.

Dans l'ensemble selon l'invention la cloison présente une double fonction, à savoir celle de renforcer la caisse à l'égard des chocs latéraux et celle de renforcer la fixation du support d'enrouleur.

Selon l'invention, ladite cloison est une pièce en tôle pliée en U, les extrémités de chacune des deux ailes de ce U comportant une feuillure qui est fixée contre la face extérieure dudit longeron intérieur.

Ainsi, dans le cas de l'invention, chaque feuillure de la cloison est fixée contre le longeron intérieur au lieu d'être fixée contre le longeron extérieur.

Selon d'autres particularités avantageuses de l'invention :
- les deux ailes du U formé par ladite cloison sont sensiblement perpendiculaire à la longueur dudit longeron intérieur ;
- chaque feuillure de la cloison est soudée audit longeron intérieur.

De préférence également, le support d'enrouleur de ceinture est fixé au longeron intérieur et à la cloison au moyen de deux vis qui traversent la paroi du longeron intérieur et chacune des deux feuillures de la cloison.

Les deux feuillures remplissent ainsi la même fonction que la plaque de mattage connue.

Les deux vis ci-dessus peuvent être vissées dans deux écrous soudés chacun à l'une des deux feuillures de la cloison.

Dans un mode de réalisation particulièrement avantageux de l'invention, le support d'enrouleur de ceinture est une plaque en tôle emboutie comprenant deux pattes traversées chacune par l'une des deux vis.

Selon un autre aspect, l'invention concerne également un véhicule automobile comportant un ensemble selon l'invention.

D'autres particularités et avantages de l'invention apparaîtront encore tout au long de la description ci-après.

Aux dessins annexés, donnés à titre d'exemples, non limitatifs :
- la figure 3 est une vue schématique en coupe transversale analogue à la figure 2 montrant un ensemble selon l'invention,
- la figure 4 est une vue en perspective analogue à la figure 1, montrant la cloison fixée au longeron intérieur d'un ensemble selon l'invention,
- la figure 5 est une vue en perspective éclatée montrant comment le support d'enrouleur de ceinture est fixé au longeron intérieur et à la cloison.

Les figures 3 à 5 représentent un ensemble selon l'invention comprenant un longeron intérieur 1 et un longeron extérieur 2 de la caisse d'un véhicule automobile.

Ces deux longerons 1, 2 forment ensemble un corps creux.

L'ensemble comprend en outre une cloison 8 conçue pour renforcer la caisse à l'égard des chocs latéraux s'étendant transversalement entre les longerons 1 et 2 et un support 5 d'enrouleur de ceinture de sécurité qui est fixé au longeron intérieur 1 dans une zone située sensiblement en regard de la cloison 8.

La figure 4 montre de plus la traverse 4 qui s'étend entre les deux longerons intérieurs 1 et qui est destinée à supporter les deux sièges avant du véhicule.

On voit sur cette figure 4 que la cloison 8 est située en regard de la traverse 4.

Conformément à l'invention, le support 5 d'enrouleur de ceinture est fixé à la fois au longeron intérieur 1 et à la cloison 8.

La figure 4 montre notamment que la cloison 8 est une pièce en tôle pliée en U, les extrémités de chacune des deux ailes de ce U comportant une feuillure 9 qui est fixée contre la face extérieure du longeron intérieur 1.

Ainsi, la position de la cloison 8 est retournée de 180° par rapport à la position de la cloison 3 de l'ensemble connu montré sur les figures 1 et 2.

De plus la cloison 8 est libre par rapport au longeron extérieur 2 qui a été enlevé sur la figure 4.

Par ailleurs, la figure 4 montre que les deux ailes 10 du U formé par la cloison 8 sont sensiblement perpendiculaires à la longueur du longeron intérieur 1.

De plus, chaque feuillure 9 de la cloison 8 est soudée au longeron intérieur 1.

La figure 3 montre également que le support d'enrouleur de ceinture 5 est fixé au longeron intérieur 1 et à la cloison 8 au moyen de deux vis, telles que la vis 11, qui traversent la paroi du longeron intérieur 1 et chacune des deux feuillures 9 de la cloison 8.

De plus les deux vis 11 sont vissées dans deux écrous, tels que l'écrou 12, soudés chacun à l'une des deux feuillures 9 de la cloison 8.

Le support d'enrouleur de ceinture 5 est une plaque en tôle emboutie comprenant (voir figure 5) deux pattes 13 traversées chacune par l'une des deux vis destinées à être vissées dans les deux écrous 12.

La figure 5 montre en outre que le bord inférieur du support 5 comporte deux vis 14 destinées à être vissées dans deux écrous 15 correspondants dont un seul est visible sur la figure 5.

Les principaux avantages de l'ensemble selon l'invention que l'on vient de décrire sont les suivants.

L'ensemble est dépourvu de plaque de mattage épaisse donc pesante.

Cette plaque de mattage est remplacée par les deux feuillures d'une cloison existante qui présente ainsi une seconde fonction.

La suppression de la plaque de mattage permet ainsi non seulement de réduire la masse, mais également d'abaisser les coûts de fabrication et de montage.

## Revendications

1. Ensemble comprenant un longeron intérieur (1) et un longeron extérieur (2) de la caisse d'un véhicule automobile, ces deux longerons (1, 2) formant ensemble un corps creux, une cloison (8) conçue pour renforcer la caisse à l'égard des chocs latéraux s'étendant transversalement entre lesdits longerons (1, 2) et un support (5) d'enrouleur de ceinture de sécurité étant fixé audit longeron intérieur (1) dans une zone située sensiblement en regard de ladite cloison (8), ledit support (5) d'enrouleur de ceinture étant fixé à la fois audit longeron intérieur (1) et à ladite cloison (8) **caractérisé en ce que** ladite cloison (8) est une pièce en tôle pliée en U, les extrémités de chacune des deux ailes (10) de ce U comportant une feuillure (9) qui est fixée contre la face extérieure dudit longeron intérieur (1).

2. Ensemble selon la revendication 1, **caractérisé en ce que** les deux ailes (10) du U formé par ladite cloison (8) sont sensiblement perpendiculaires à la longueur dudit longeron intérieur (1).

3. Ensemble selon l'une des revendications 1 ou 2, **caractérisé en ce que** chaque feuillure (9) de la cloison (8) est soudée audit longeron intérieur (1).

4. Ensemble selon l'une des revendications 2 ou 3, **caractérisé en ce que** le support (5) d'enrouleur de ceinture est fixé au longeron intérieur (1) et à la cloison (8) au moyen de deux vis (11) qui traversent la paroi du longeron intérieur (1) et chacune des deux feuillures (9) de la cloison (8).

5. Ensemble selon la revendication 4, **caractérisé en ce que** les deux vis (11) sont vissées dans deux écrous (12) soudés chacun à l'une des deux feuillures (9) de la cloison (8).

6. Ensemble selon l'une des revendications 4 ou 5, **caractérisé en ce que** le support (5) d'enrouleur de ceinture est une plaque en tôle emboutie comprenant deux pattes (13) traversées chacune par l'une des deux vis (11).

7. Véhicule automobile comportant un ensemble selon l'une des revendications 1 à 6.

## Patentansprüche

1. Anordnung, einen inneren Längsträger (1) und einen äußeren Längsträger (2) des Aufbaus eines Kraftfahrzeugs umfassend, wobei diese beiden Längsträger (1, 2) gemeinsam einen Hohlkörper bilden, eine Trennwand (8), die gestaltet ist, um den Aufbau gegenüber einem Seitenaufprall zu verstärken, und sich querlaufend zwischen den besagten Längsträgern (1, 2) erstreckt und eine Sicherheitsgurteinzugshalterung (5), die in einer Zone am besagten inneren Längsträger (1) befestigt ist, die sich in etwa gegenüber der besagten Trennwand (8) befindet, wobei die besagte Sicherheitsgurteinzugshalterung (5) sowohl am besagten inneren Längsträger (1) als auch an der besagten Trennwand (8) befestigt ist, **dadurch gekennzeichnet, dass** die besagte Trennwand (8) ein Blechstück ist, das in Form eines U gebogen ist, wobei die Enden eines jeden der beiden Flügel (10) dieses U einen Falz (9) umfassen, der an der Außenseite des besagten inneren Längsträgers (1) befestigt ist.

2. Anordnung nach Anspruch 1, **dadurch gekennzeichnet, dass** die beiden Flügel (10) des U, das durch die besagte Trennwand (8) gebildet wird, in etwa senkrecht zur Länge des besagten inneren Längsträgers (1) stehen.

3. Anordnung nach einem der Ansprüche 1 oder 2, **dadurch gekennzeichnet, dass** jeder Falz (9) der Trennwand (8) mit dem besagten inneren Längsträger (1) verschweißt ist.

4. Anordnung nach einem der Ansprüche 2 oder 3, **dadurch gekennzeichnet, dass** die Sicherheitsgurteinzugshalterung (5) mit zwei Schrauben (11) am inneren Längsträger (1) und an der Trennwand (8) befestigt ist, die durch die Trennwand des inneren Längsträgers (1) und durch jeden der beiden Falze (9) der Trennwand (8) führen.

5. Anordnung nach Anspruch 4, **dadurch gekennzeichnet, dass** die beiden Schrauben (11) in zwei Muttern (12) geschraubt werden, die jeweils auf einen der beiden Falze (9) der Trennwand (8) geschweißt sind.

6. Anordnung nach einem der Ansprüche 4 oder 5, **dadurch gekennzeichnet, dass** die Sicherheitsgurteinzugshalterung (5) eine Platte aus tiefgezogenem Blech ist, die zwei Laschen (13) umfasst, durch die jeweils eine der beiden Schrauben (11) führt.

7. Kraftfahrzeug, eine Anordnung nach einem der Ansprüche 1 bis 6 umfassend.

## Claims

1. Assembly comprising an inner rail (1) and an outer rail (2) of the body of a motor vehicle, these two rails (1, 2) together forming a hollow body, a partition (8) designed to reinforce the body against side impacts extending transversely between said rails (1, 2) and a support (5) for a seat belt retractor being attached to said inner rail (1) in an area located substantially facing said partition (8), said support (5) for a belt retractor being attached to both said inner rail (1) and said partition (8), **characterised in that** said partition (8) is a part made of sheet metal and folded into the shape of a U, the ends of each of the two legs (10) of this U comprising a rebate (9) that is attached onto the outer face of said inner rail (1).

2. Assembly according to claim 1, **characterised in that** the two legs (10) of the U formed by said partition (8) are substantially perpendicular to the length of said inner rail (1).

3. Assembly according to one of claims 1 and 2, **characterised in that** each rebate (9) of the partition (8) is welded to said inner rail (1).

4. Assembly according to one of claims 2 and 3, **characterised in that** the support (5) for a belt retractor is attached to the inner rail (1) and to the partition (8) via two bolts (11) that pass through the wall of the inner rail (1) and each of the two rebates (9) of the partition (8).

5. Assembly according to claim 4, **characterised in that** the two bolts (11) are screwed into two nuts (12) each welded to one of the two rebates (9) of the partition (8).

6. Assembly according to one of claims 4 and 5, **characterised in that** the support (5) for a belt retractor is a drawn plate of sheet metal comprising two lugs (13), with one of the two bolts (11) passing through each of said lugs.

7. Motor vehicle comprising an assembly according to one of claims 1 to 6.
